# EUROPEAN PATENT SPECIFICATION

(11) **EP 0 572 480 B1**
(45) Date of publication and mention of the grant of the patent: **10.09.1997**
(21) Application number: 92905186.0
(22) Date of filing: 21.02.1992
(51) Int. Cl.: F16L 37/00

(54) **CONNECTOR APPARATUS FOR USE IN THE SUPPLY OF FLUID MATERIAL**
VERBINDUNGSVORRICHTUNG FÜR FLÜSSIGKEITSZUFUR
APPAREIL DE RACCORDEMENT UTILISE POUR L'ALIMENTATION EN FLUIDE

(30) Priority: 22.02.1991 GB 9103780
(43) Date of publication of application: 08.12.1993
(73) Proprietor: AUTOMATED COUPLING TECHNOLOGY LIMITED, London SE23 2LX (GB)
(72) Inventor: SAVILL, Ian Charles, London SE28 8DH (GB)
(74) Representative: Jones, Graham H.
(86) International application number: GB9200319
(87) International publication number: WO9214960

(56) References cited:
- EP-A- 0 044 651
- EP-A- 0 079 029
- WO-A-81/00295
- FR-A- 2 638 731
- US-A- 3 662 793
- US-A- 4 030 524

## Description

This invention relates to connector apparatus for use in the supply of fluid material, for example liquids, gases, mixtures of liquids and gases, and flowable solids.

Many types of connector apparatus for use in the supply of fluid material are known. The connector apparatus is connected to a complementary connector so that the fluid material passes through the connector apparatus and the complementary connector from one place to another. One such known connector apparatus is disclosed in WO-A-81/00295 which relates to a fluid coupling and shut-off valve. In WO-A-81/00295, the connector apparatus is permanently connected, and the fluid being conveyed is used to maintain the connection. If the pressure of the liquid being conveyed drops, then the connector apparatus separates to shut-off the connection to the fluid.

Another type of known connector apparatus is that which is designed repeatedly to be connected and disconnected for fueling and re-fueling purposes. This type of connector apparatus may be used, for example, in a refuelling tanker for an aircraft. The tanker connector apparatus is normally engaged on a complementary connector housed in the aircraft by firstly positioning the tanker connector apparatus over the complementary connector then twisting the connector apparatus some thirty three degrees in a clockwise motion. Once located in this position a lever is operated to finalize the locking of the connector apparatus to the complementary connector and to open a fuel delivery valve. The reverse of these actions, starting with the closing of the fuel delivery valve, initiates the removal of the connector apparatus from the complementary connector. Whilst a fuel delivery valve lever remains in an open position, the connector apparatus remains locked in position. The connector apparatus cannot be removed while the fuel delivery is in process. A safety lock mechanism is designed to prevent the possibility of fuel spillage and accidents relating to disengagement of the connector before the supply of fuel is completed and closed down.

Other safety systems are in use to stop driveaway situations occurring whereby the refuelling tanker may be moved whilst still being connected to the aircraft. For example, FR-A-2638731 discloses a similar coupling system for a refuelling truck. This document also discloses a warning system giving a visual indication upon incorrect connection. These systems however are expensive and not fool proof, and many driveaway accidents still occur.

There are a great deal of situations where it would be desirable to disconnect the connector apparatus without the need of the error factor being involved, either by a remote signal source or by a misactivation of the supply equipment by the operator. A great deal of complex equipment has been evolved to try and cover such situations, but such equipment is very costly and time consuming in its sequential operation. An operator may at times deliberately bypass such safety equipment in order to speed up the process and reduce the time involved in such operations, see for example FR-A-2638731.

It is an aim of the present invention to provide connector apparatus which reduces the above mentioned problems.

Accordingly, the present invention provides connector apparatus for use in the supply of fluid material, which connector apparatus comprises the combination of a jaw segment mechanism which comprises a plurality of pivotable jaw segments and which is for connecting the connector apparatus to a complementary connector, first biassing means for operating the jaw segment mechanism in order to disconnect the connector apparatus from the complementary connector, control signal means which operates consequent upon an incorrect connection of the connector apparatus to cause the disconnection of the connector apparatus from the complementary connector via the first biasing means and thus allow the connector apparatus to separate from the complementary connector, at least one movable cylindrical member which moves in order to allow the fluid material to pass through the connector apparatus, and a single valve means for stopping the flow of the fluid material through the connector apparatus.

As indicated above, the fluid material may be, for example, liquids, gases, mixtures of liquids and gases, and flowable solids. The connector apparatus may be used for supplying the fluid material from any desired position to any other desired position. Thus, the connector apparatus may be used in the filling or emptying of containers as may be desired. The connector apparatus may be employed on road tankers, locomotive goods tankers, aircraft, space vehicles, ships, offshore oil rigs, oil refineries and chemical works.

The connector apparatus may be provided with second biassing means for closing the valve means.

The jaw segment mechanism may include a jaw actuator for operating the jaw segments of the jaw segment mechanism.

The connector apparatus may include third biassing means for disengaging the jaw actuator and thus allowing the release of the jaw segments from the complementary connector.

The first biassing means may also be for neutralising the jaw segments in order to release the jaw segments of the jaw segment mechanism from the complementary connector.

The connector apparatus may include pressure sensor means for controlling the pressure of the fluid material passing through the connector apparatus. Such pressure sensor means may advantageously be employed, for example, in the case of an aircraft which may be loading fluid material. An excess of supply pressure could damage the aircraft fluid material receptacle.

The connector apparatus may include stress sensor means for sensing excessive stress to a hose contained in the connector apparatus. Such stress sensor means may advantageously be employed, for example, in the case of a ship which may be loading or offloading and which may be moving up an down depending upon wave motion.

The connector apparatus may include movement sensor means for sensing the initiation of movement of a vehicle or vessel to which the connector apparatus is connected during use and for producing a controlled signal in response thereto.

The connector apparatus may be one in which the control signal means comprises a cylindrical piston and valve arrangement disposed to control the flow of the fluid material through the connector apparatus in response to a control signal.

The connector apparatus may include a mechanism for detecting any misactivation between the connector apparatus and the complementary connector, and for operating such that the jaw segments of the jaw segment mechanism are locked out.

The connector apparatus may include neutralising means whereby a misactivation with the complementary connector can be cancelled and a reconnection to the complementary connector is able to resume.

The connector apparatus may include manual activation means for enabling the connector apparatus to be physically engaged and energised or de-energised and removed from the complementary connector.

The connector apparatus may include automatic activation electrical operated solenoid valve means to energise or de-energise the connector apparatus. The connector apparatus may include sense and termination means for sensing breaking of a connection between the connector apparatus and the complementary connector, and for terminating the supply of the fluid material.

The connector apparatus may be one in which the first, second and third biassing means are for returning the connector apparatus for further use when an activation supply pressure has been exhausted.

The connector apparatus may include cycle termination means for stopping operation of the jaw actuator in the event of a misactivation of the connector apparatus.

Embodiments of the invention will now be described solely by way of example and with reference to the accompanying drawings in which:
Figure 1 is a longitudinally sectioned side view of part of the connector apparatus in a disconnected closed state;
Figure 2 is a similar view to Figure 1 but shows additional parts;
Figure 3 is a longitudinally sectioned base view with additional parts;
Figure 4 is a similar view to Figure 3 and shows the connector apparatus engaged to a flange of a complementary connector;
Figure 5 (A) is a longitudinally sectioned side view of an upper section, and Figures 5 (B) (C) (D) (E) and (F) illustrate a series of jaw mechanism movements;

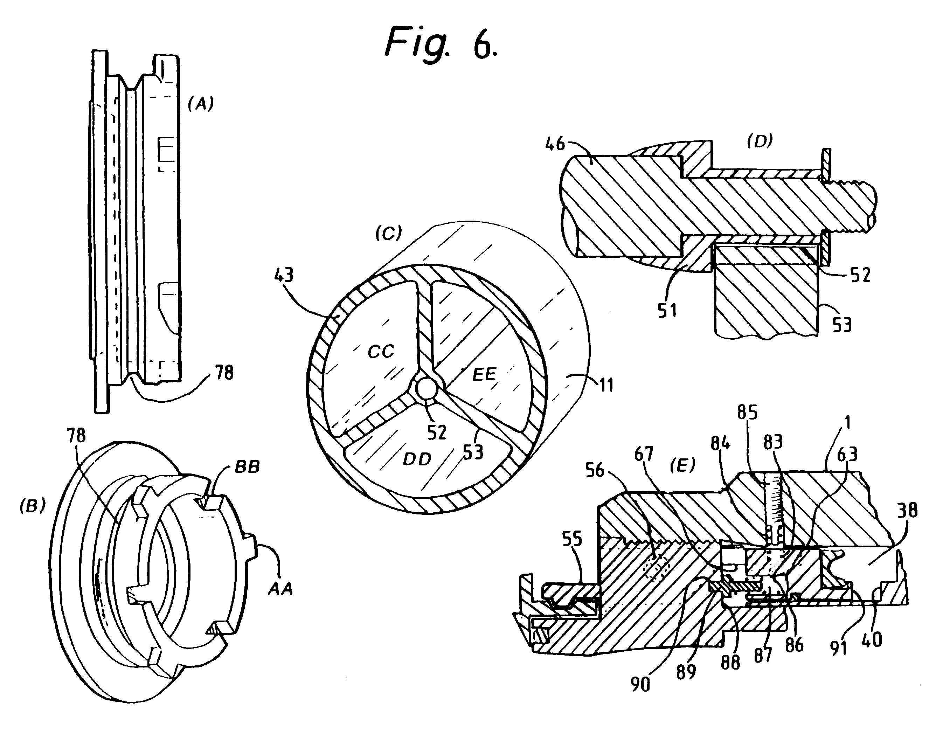

Figures 6 (A) to (E) are a series of enlarged sections of the complementary connector flange and connector apparatus, with Figure 6 (A) being a side view of a complementary connector flange with an additional feature depicted, Figure 6 (B) being a partial perspective view of a complementary connector flange with the additional feature depicted,Figure 6 (C) being a front perspective view of the piston sleeve depicting typical vane arrangement, Figure 6 (D) being a longitudinally sectioned side view of the valve rotation spacer, and Figure 6 (E) being a longitudinally sectioned side view of the jaw return spring mechanism along with a similar view of the return spring mechanism relative to the jaw actuator;
Figure 7 is a longitudinally sectioned base view of the connector apparatus connected to a complementary connector with the main valve closed;
Figure 8 is a longitudinally sectioned side view of the connector apparatus with the main valve open;
Figures 9 (A) to (F) are a six part sequence of operation in which Figure 9 (A) shows the connector apparatus being positioned for connection to a complementary connector, Figure 9 (B) shows the connector apparatus in an application position, Figure 9 (C) shows the connector apparatus locked onto a complementary connector, Figure 9 (D) shows a main valve open with delivery or receiving in progress, Figure 9 (E) shows the main valve closed with jaws deactivated, and Figure 9 (F) shows the connector apparatus disconnecting from the complementary connector;
Figure 10 is a longitudinally sectioned base view of a connector apparatus depicting various modifications to the cylinders along with a combining of the jaw actuator and the delivery nozzle along with the main valve, a further feature of a fluid recovery aperture being added;
Figure 11 is a longitudinally sectioned base view with modifications to the spring retainer being combined with the piston sleeve and the jaw static piston;
Figure 12 is a longitudinally sectioned base view with further modifications to the jaw static piston and the delivery nozzle being combined with the jaw actuator, a partial operation depicting a misactivation also being shown;
Figure 13 is a similar view to Figure 12 with the connector apparatus connected to a complementary connector, and with further modifications being shown; and
Figure 14 is a longitudinally sectioned base view of a connector apparatus with the main valve open.

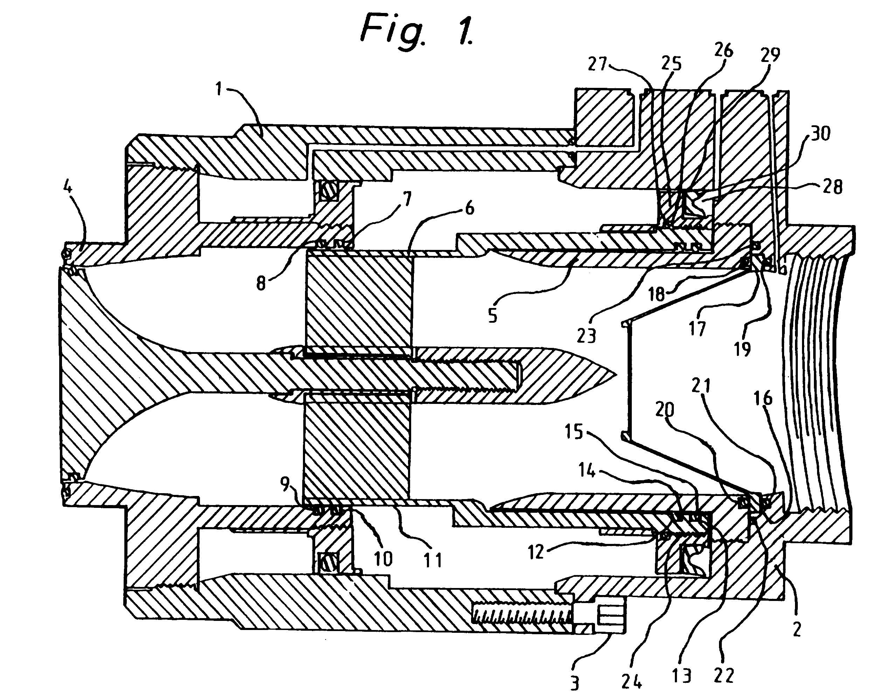

Referring to Figure 1 of the drawings, the connector apparatus comprises a first cylinder 1 linked to be coaxially aligned with a second cylinder 2 by means of a series of bolts 3. The cylinder 1 is threaded to the left to receive a delivery nozzle 4 which is coaxially aligned within the cylinder 1. The cylinder 2 is threaded internally to the right to receive a static piston 5 which is a coaxially aligned tubular member.

At least one moving cylindrical member in the form of an axially aligned tubular piston sleeve 6 is housed within the delivery nozzle 4 and is sealed against fluid material leakage by two annular grooves 7 and 8 which contain two O-ring seals 9 and 10. The O-rings seals 9 and 10 seal against a surface 11 of the piston sleeve 6, the piston sleeve 6 being such as to traverse to the left to open and to the right to close.

The right hand side of the piston sleeve 6 is coaxially aligned over the static piston 5. Within the piston sleeve 6 are two annular grooves 12 and 13. Housed within the grooves 12 and 13 are two O-rings seals 14 and 15 which act to seal against fluid material leakage.

An annular recess 16 is incorporated in the cylinder 2 to house a filter element 17. The filter element 17 is sealed against leakage by two O-ring seals 18 and 19, these being retained in recessed annular grooves 20 and 21. The recessed annular groove 20 is incorporated in the static piston 5, and the recessed annular groove 21 is incorporated in the cylinder 2. A further annular groove 22 is incorporated in the cylinder 2 in order to retain an O-ring seal 23 for the purpose of sealing against the abut surface of the static piston 5.

To the right hand outer side of the piston sleeve 6 is an annular threaded section 24. An annular spring retainer 25 is screwed onto the piston sleeve 6. Incorporated within the spring retainer 25 is an annular groove 26. Contained within this annular groove 26 is an O-ring seal 27. The O-ring seal 27 seals the surfaces of the piston sleeve 6 and the spring retainer 25 when the cylinder 2 is under operational pressure in an annular chamber cavity 28. To the right hand side of the outer section of the spring retainer 25 is a seal recess 29. This seal recess 29 houses a U seal 30.

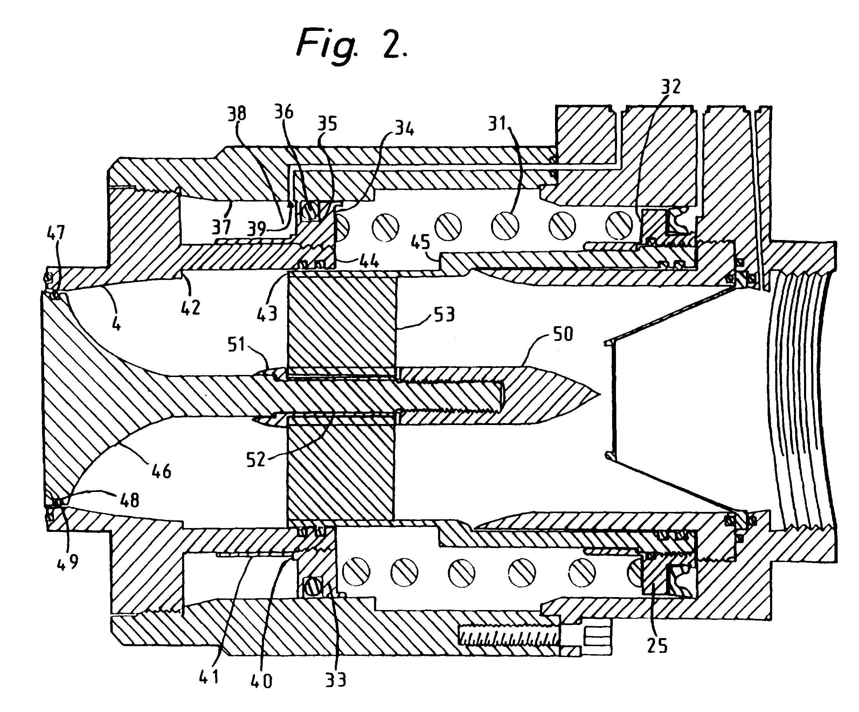

Referring now to Figure 2, further parts are described. To the left hand side of the spring retainer 25 is a second biassing means in the form of a compression spring 31. This is coaxially aligned over the spring retainer 25 and sits against an abut stop 32. To the left hand side of the compression spring 31 is an annular jaw static piston 33. The jaw static piston 33 retains the compression spring 31 which sits against the abut stop 34. The jaw static piston 33 is threaded internally thus allowing it to be screwed onto the delivery nozzle 4. An annular groove 35 houses an O-ring seal 36 which seals against a cylinder wall 37, thus allowing a compressed gas, for example compressed air, to be introduced into a cavity 38 via a port delivery 39. Further left on the jaw static piston 33 is a stop 40 and a surface area 41. On the inner section of the delivery nozzle 4 is an abut stop 42. When the piston sleeve 6 travels to the left to gain the open flow position, its surface area 43 stops against the abut stop 42. Further stops are incorporated to the right, the first stop being an abut stop 44 which is on the delivery nozzle 4. The abut stop 44 is contacted by a surface area 45 which is incorporated on the piston sleeve 6. The stops 42 and 44 act together when the surface areas 43 and 45 of the piston sleeve 6 come into contact. This occurs when the piston sleeve 6 completes the traversing motion to the left. Mounted in the centre of the piston sleeve 6 is a single valve means in the form of a main valve 46. In order to seal the main valve 46 against fluid material leakage, an O-ring seal 47 is housed in an annular groove 48. The O-ring seal 47 then becomes compressed against a surface 49 in the delivery nozzle 4. The main valve 46 is retained in the piston sleeve 6 by a tubular flow control lock nut 50. In order to allow the main valve 46 to rotate during operation, a tubular rotation spacer 51 is inserted through a central tubular section 52 in the piston sleeve 6. When the lock nut 50 is tightened against the spacer 51 a small clearance gap remains. For clarity, this section will be described further in Figure 6. The tubular section 52 is housed within a series of support vanes 53 further described in Figure 6.

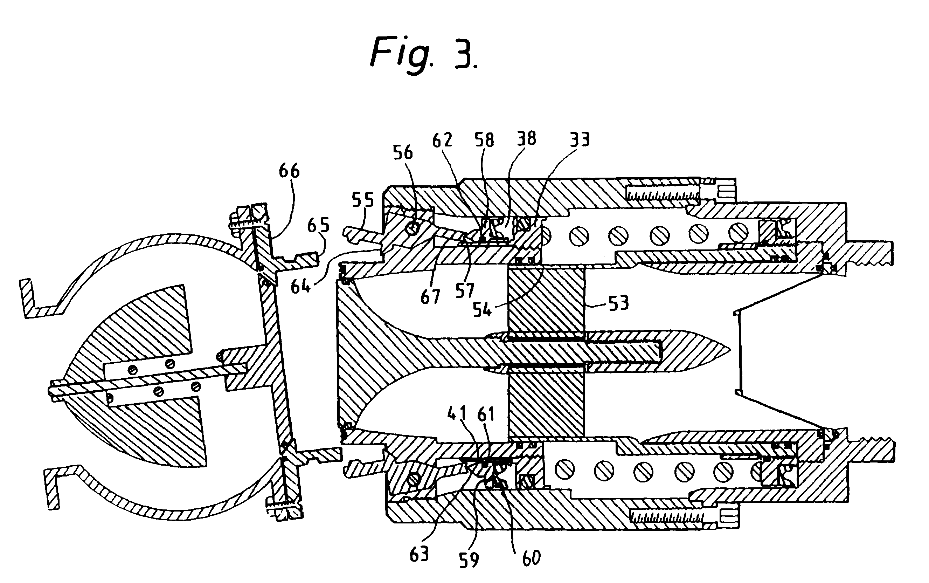

Referring now to Figure 3, the vanes 53 are outwardly housed against the inner tubular surface of the piston sleeve 6 at point 54. The fluid material flows around the vanes 53 when the connector apparatus is opened. Mounted around the circumference of the delivery nozzle 4 are a connecting means in the form of a series of jaw segments 55. The jaw segments 55 are retained in slots by means of a series of retaining pins 56. To the right hand side of the jaw segments 55 is a mechanism for detecting a misactivation such that the jaws segments 55 are locked out in the form of a series of angular grooves 57. To the right hand side of the grooves 57 is a jaw segments operator in the form of an annular jaw actuator 58 which is annularly mounted over the jaw static piston 33 and traverses from left to right on the surface area 41. To the right hand side of the jaw actuator 58 is an annular recess 59. A U seal 60 is retained in the recess 59 for the purpose of projecting the jaw actuator 58 to the left when the chamber 38 is pressurised. A further seal 61 is housed in an annular recess 62 incorporated in the inner surface of the jaw actuator 58. This completes the sealing of the chamber 38 and thus allows the pressurisation of the chamber 38, which in turn allows the movement of the jaw actuator 58 when a source of pressure is applied.

Further to the left on the jaw actuator 58 is a tapered section 63. In the event of a misactivation of the connector apparatus, a cycle termination means in the form of tapered section 63 engages into the groove 57 and the jaw actuator 58 is stopped from completing its operation. All subsequent functions are terminated until the pressure in the chamber 38 has been exhausted, thus neutralising the connector apparatus.

To the lower left section of the jaw 55 is an abut face 64. This abut face 64 protrudes from the retaining slot in the delivery nozzle 4. The purpose of the abut face 64 is to make surface contact with an abut stop face 65 in the complementary connector flange 66, when connection of the connector apparatus and complementary connector takes place. The jaw segments are partially closed by this action and the annular grooves 57 are moved in an outward motion, thus creating a clearance for the tapered section 63 to pass beneath the groove 57 and engage an under surface 67 located in the jaw 55. The same action occurs simultaneously with all other jaw segments due to the action of the jaw actuator 58. Thus the locking mechanism is of a number of uniformly moving jaws locking and unlocking with a single jaw actuator 58 to control the individual jaw locking and unlocking movements.

Also the failsafe grooves 57 in the jaw segments ensure that any individual jaw will stop the connector apparatus function unless all jaw segments have been properly engaged. This device operates without the need for numerous cam lock devices and it monitors its own operation.

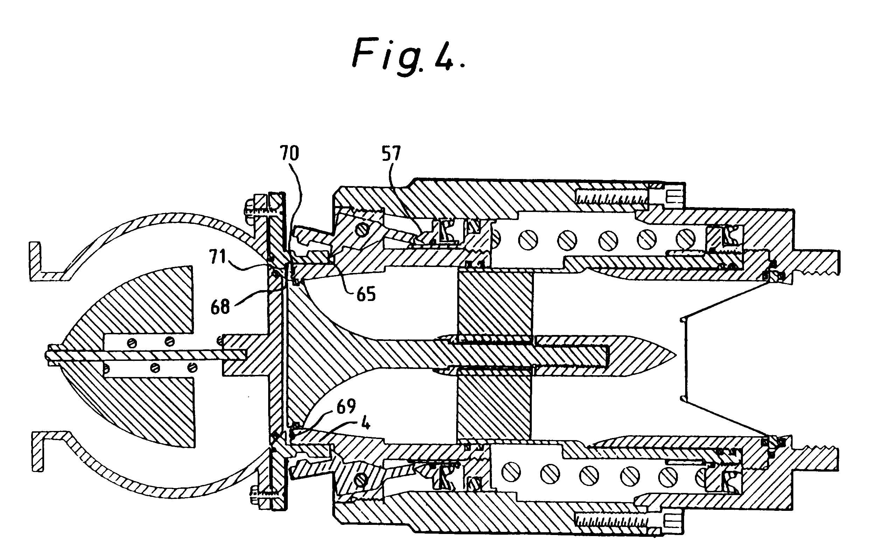

In Figure 4, the first stage of connection of the connector apparatus to the complementary connector can be seen. The delivery nozzle 4 is engaged to a complementary connector flange annular aperture 68. The abut face 65 contacts and proceeds to depress the jaw abut stop 64 inward, and the resulting action raises the inner groove 57 and allows the connection to proceed. Encased in an annular groove 69 in the face section of the delivery nozzle 4 is an O-ring seal 70. The seal 70 is compressed against an abut stop 71 and completes the sealing of the delivery nozzle 4 to the complementary connector flange 66. Thus the fluid material being transfered is contained against leakage while being conveyed.

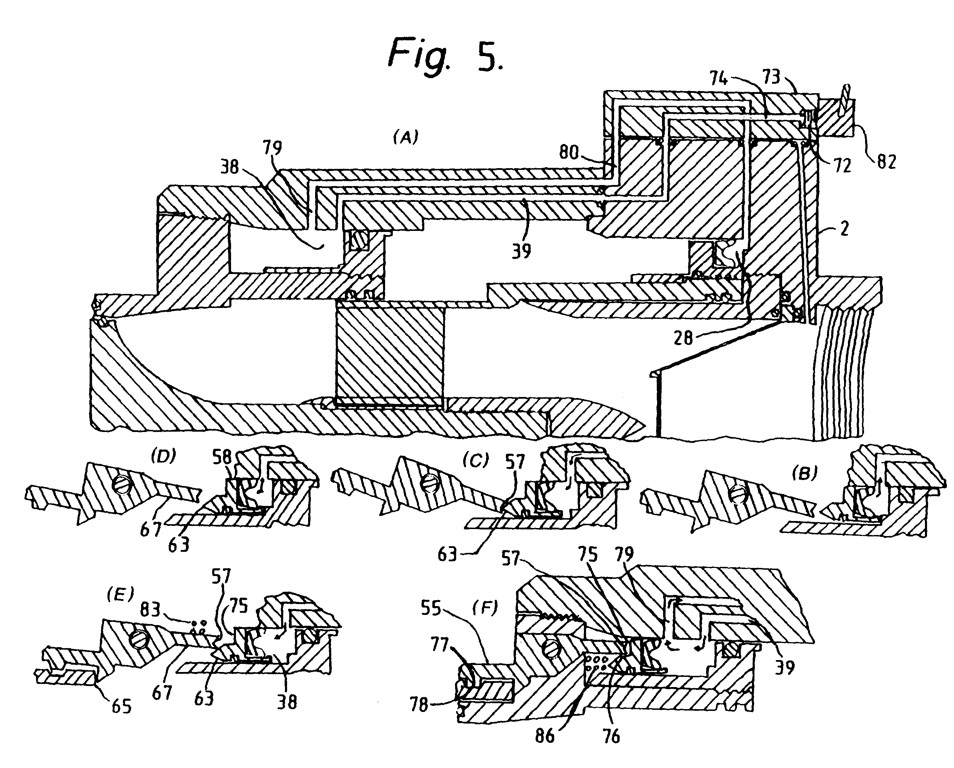

Referring now to Figure 5 (A) to (F), there will now be described the operation of jaw activation and the subsequent actions that are derived. At the top right hand side of Fig 5 (A) is a manual activation means in the form of a hand operated valve 82 connected to the induction port 72. Similarly an automatic activation means in the form of an electrically operated solenoid valve (not depicted) could replace the hand operated valve 82. The induction port 72 is contained in a control signal means in the form of a valve block 73. When an applied pressure of, for example, compressed air is applied through the port 72, it compresses through a delivery feed 74 and continues into the chamber 38 via port 39 in cylinder 2. If the connection procedure has been incorrectly carried out either by manual or automatic misalignment, the pressure induced into the chamber 38 applies a force onto the seal 60 which in turn forces the jaw actuator 58 to overcome the first biassing means in the form of a series of preloaded biassing springs 83 housed in the jaw segments 55. For clarity, the biassing springs 83 will be depicted in Figure 6 (E). In the event that the jaw actuator 58 tapered section 63 fails to engage under the inner face 67 on the jaw segments 55 to overcome the biassing force of springs 83, the jaw actuator 58 tapered section 63 is subsequently locked into the groove 57 and all other functions are stopped as shown in Figure 5 (C). When the pressure from the induction port 72 is exhausted, the third biassing means in the form of a series of biassing springs 86 returns the jaw actuator 58 to a neutral position as shown in Fig 5 (B).

When the correct engagement has been made as shown in Fig 5 (D), the jaw segments 55 are facially engaged by the complementary connector flange abut face 65. The jaw segments 55 allow the jaw actuator 58 to travel left and the tapered section 63 engages the inner face 67 as seen in Fig 5 (E). It is at this stage that the jaw actuator overcomes the biassing force of springs 83. To the left hand side of the jaw actuator 58 is an abut face 75. When the travel of the jaw actuator 58 is complete, the abut face 75 stops against the groove 57. At this stage, the jaw segments 55 come to rest on the surface 76 of the jaw actuator 58 and the surface 67 of jaw segments 55. At this stage, the lower segments 77 of the jaw segments 55 lock into the annular groove 78 housed in the complementary connector flange 66. With the jaw locking process complete, the seal 60 exposes a return pressure port 79 contained in the cylindrical wall of cylinder 1. The return pressure contained in the chamber 38 is conveyed into cylinder 2 through a tubular port 80 and is then transfered into the valve block 73. The pressure passes through a control valve (not shown for clarity) and returns back into the cylinder 2 through the induction port 81, and into the piston sleeve 6 induction chamber 28.

Referring now to Figures 6 (A) to (E), there is shown in Fig 6 (A) how the groove 78 has been incorporated in a standard aircraft style complementary connector. The present connector apparatus does not utilise the manual connection points denoted AA and locking mechanism BB as depicted in Fig 6 (B). Fig 6 (C) is a partial view of the forward section of piston sleeve 6 showing the support vanes 53 along with the central tubular section 52. The fluid material is conveyed through the apertures denoted CC,DD and EE as shown in Fig 6 (C). The abut face 43 and the surface 11 are also denoted. In Fig 6 (D) the valve rotation spacer 51 has been enlarged along with a section of the main valve 46. The lower section of Fig 6 (D) depicts the tubular section 52 along with the vanes 53 of the piston sleeve 6.

As can be seen from Fig 6 (E), when the jaw actuator 58 is energized via the chamber 38, the tapered section 63 engages under the inner jaw surface 67. On the outer surface of the jaw segments 55 are a series of aperture recesses 84 containing biassing springs 83. The biassing springs 83 are retained in the jaw segments 55 outer jaw surface apertures 84 by means of a series of threaded screws 85 which are contained in the cylinder 1. When the jaw actuator 58 is de-energized, the biassing force of the springs 83 forces the outer jaw surface apertures 84 inward. The jaw segments 55 are then projected outward by means of a pivoting motion on the retaining pins 56. The jaw actuator 58 is returned to its neutral position by a series of biassing springs 86 equally spaced in apertures 87 sequentially set between the jaw actuator taper 63. The biassing springs 86 are retained in the delivery nozzle inner face 88 by a series of guide pins 89. These guide pins 89 are sequentially spaced in recessed apertures 90 in the delivery nozzle inner face 88. A pre biassing force forces the jaw actuator 58 towards its neutral position, whereby the abut surface 91 contacts the abut surface 40 when the pressure from the chamber 38 is exhausted.

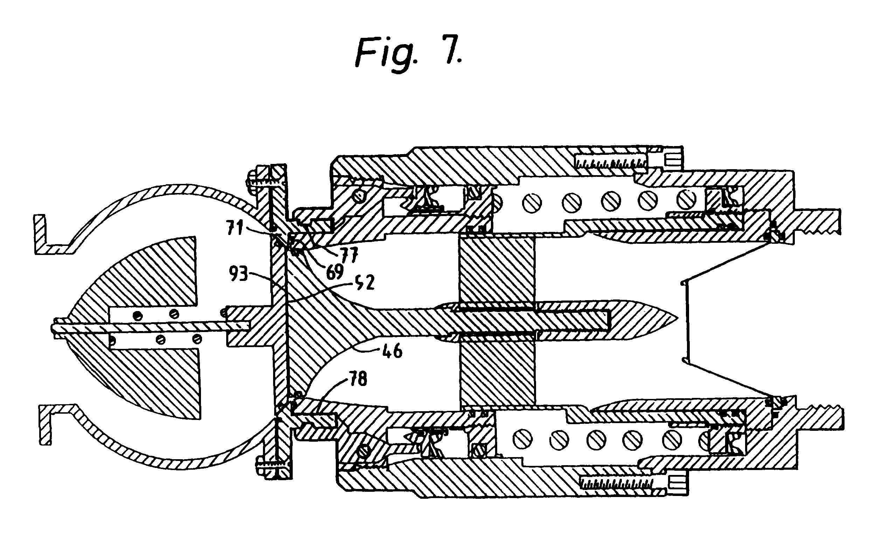

In Figure 7, the connector apparatus is connected to the complementary connector flange. The jaw actuator 58 has engaged the lower surface 77 of the jaw segments 55 which have subsequently locked into the annular groove 78. The abut face 92 of the main valve 46 engages the abut face 93 of the complementary connector flange 66. The seal 69 is compressed against the abut face 71 and the fluid material transfer is able to commence.

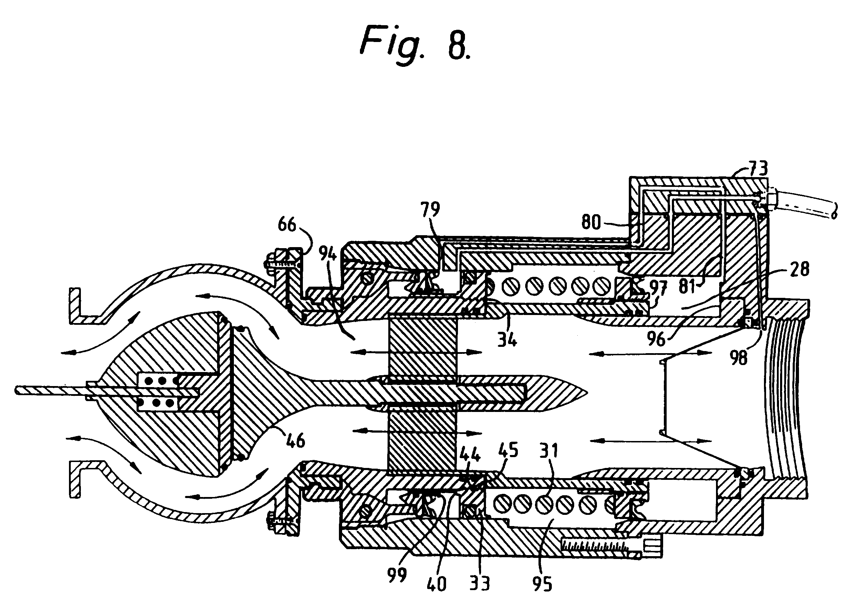

In Figure 8, the connector apparatus is connected to the complementary connector flange 66. The main valve 46 has been projected towards the left thus opening the chamber 94 and therefore allowing the fluid material to pass through the connector apparatus. To achieve this position the following actions have to occur. The return pressure from the chamber 38 passes through to the piston sleeve 6 chamber 28 via ports 79 and 80. The return pressure continues through the valve block 73 and into the delivery port 81 through to the chamber 28. The subsequent pressure applied induces the piston sleeve 6 to overcome the pre loaded biassing force of the spring 31, which is compressed against the abut stop 34. The main valve 46 is projected into the complementary connector and stops when the abut stop 45 on the piston sleeve 6 contacts the abut stop 44 on the jaw static piston 33. While traversing left, the spring 31 has the ability to rotate outward as if to unwind, to overcome the consequential movements on the main valve 46. The rotation spacer 51 allows spring 31 to rotate outward while maintaining the main valve 46 in a static position.

Towards the right hand side of the static piston 5 is an abut face 96 and to the left side on the end of the piston sleeve 6 is an abut face 97. When the source pressure to the chamber 28 is exhausted, the piston sleeve 6 is projected to the right by the biassing force of the spring 31. To allow for the control of pressure of the fluid material passing through the connector apparatus, a tubular port 98 in cylinder 2 conveys the pressurised fluid material into the valve block 73 whereby it acts upon a pressure sensor means in the form of a pressure relief valve (not shown for clarity). This in turn closes the pressure delivery to chamber 28 and opens an exhaust valve (not shown for clarity) thus relieving the applied force acting on the spring 31. The spring 31, in overcoming the applied force, proceeds to close the main valve 46 which in turn controls the flow of the fluid material. A vice versa action of the valve block 73 will reinstate the full flow process. In the event of an over pressurisation of the fluid material, the main valve 46 closes completely and initiates the release of the connector apparatus by allowing the jaw actuator 58 to de-energize, and the jaw segments 55 to release from the complementary connector flange 66. This action is also achieved for normal disconnection purposes by reversing the induction process. When the induction pressure in the valve port 72 is exhausted, the biassing force of the spring 31 overcomes the pressure in the chamber 28. The exhausting pressure however is still in excess of the biassing action of the jaw actuator 58 return springs 86. When the main valve 46 is closed, the pressure continues to reduce whereby the biassing action of the jaw actuator 58 return springs 86 forces the jaw actuator 58 to project from left to right until the abut face 99 on the jaw actuator 58 contacts the abut face 40 on the static piston 33. The jaw segments 55 are then projected inward by the biassing action of the springs 83, thus forcing the jaw segments 55 to release from the groove 78 in the complementary connector flange 66.

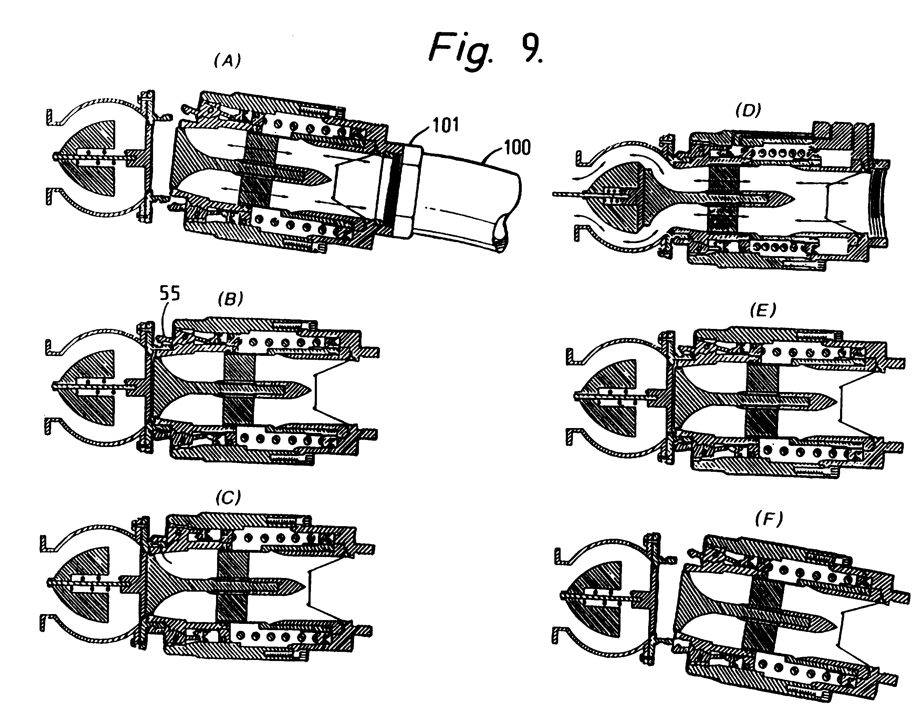

Referring now to Figures 9 (A) to (F), Fig 9 (A) shows a connector apparatus with a commodity feed hose 100 suitably connected to the apparatus via a connector flange 101. The connector flange 101 is threaded into the rear of cylinder 2. Although a threaded connection has been depicted, a bolted flange style could also be used.

Figure 9 (B) shows a connector apparatus engaged to a complementary connector flange with the jaw mechanism in an open position.

Figure 9 (C) shows a connector apparatus connected to a complementary connector flange with the jaws locked into the groove 78 with the main valve 46 closed.

Figure 9 (D) shows the connector apparatus in a connected state with the main valve 46 open.

Figure 9 (E) shows the reverse action whereby the main valve has closed and the jaw mechanism released.

Figure 9 (F) shows a connector apparatus disconnected from a complementary connector.

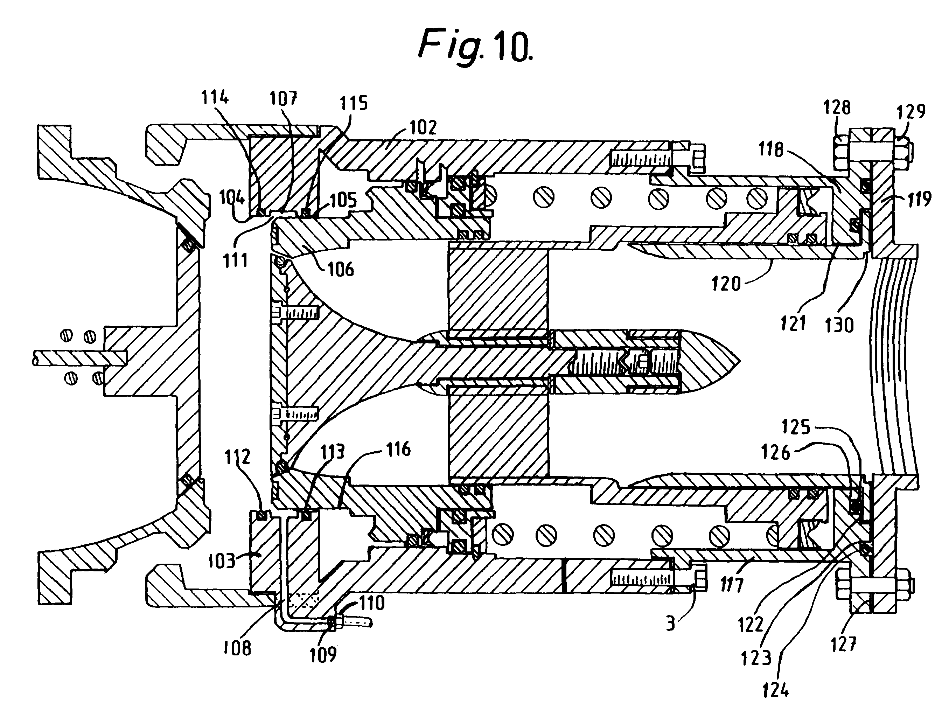

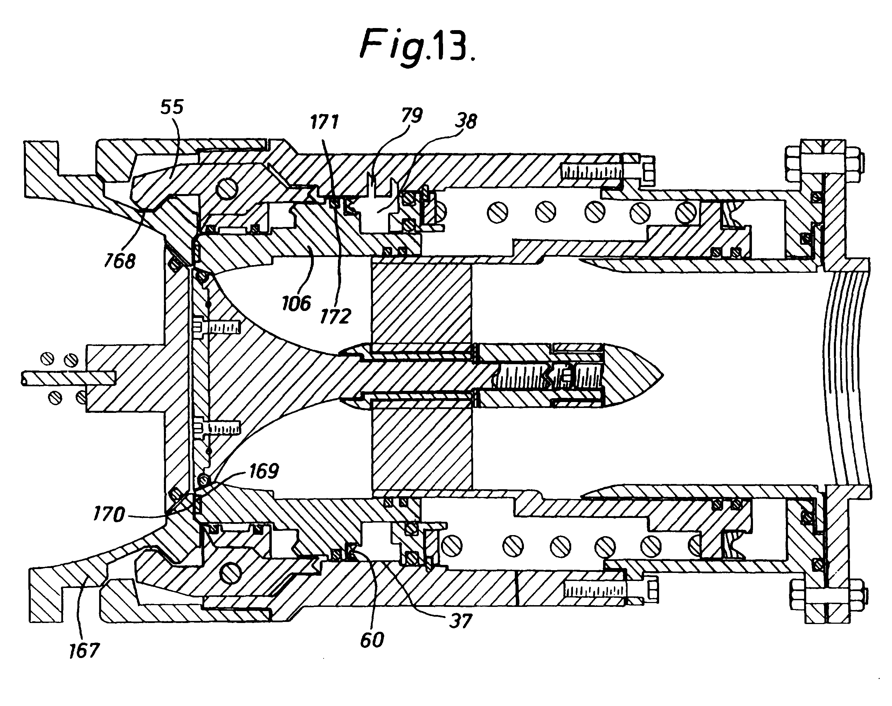

Referring now to Figure 10 there is shown a modified version of a connector apparatus in which the first cylinder 102 incorporates the annular jaw segment mounting 103. Housed within the jaw segment mounting 103 are two annular bearing surfaces 104 and 105. The bearing surfaces 104 and 105 allow the combined delivery nozzle-jaw actuator 106 to travel from right to left as later described in Figure 13. With the possible minor loss of fluid material during separation of the connector apparatus and the complementary connector, an annular groove 107 is contained between the bearing surfaces 104 and 105. In the lower section of the annular groove 107 is a port 108. This supplies a vacuum hose connection point 109. With a suitable hose 110 connected to a vacuum source, a suction is created around the annular groove 107 via port 108. The subsequent air that is drawn in through the aperture 111 between the bearing surface 104 and the front outer circumference of the delivery nozzle-jaw actuator 106 conveys any fluid material that may remain away from the surface area and returns the excess fluid material back into the supply system. It may be necessary to close the vacuum source while the connector apparatus is either delivering or receiving fluid material. To achieve this, two O-ring seals 112 and 113 are housed in two annular grooves 114 and 115 contained in the bearing surfaces 104 and 105. When the delivery nozzle-jaw actuator 106 is energised it travels from the right in the closed position to the left to open. While traversing to the left the delivery nozzle-jaw actuator 106 passes through the O-ring seal 112 with the delivery nozzle-jaw actuator 106 surface area 116 being in contact with the O-ring seal 113. The subsequent engagement of the O-ring seal 112 by the delivery nozzle-jaw actuator 106 surface area 116 closes the annular groove 107 and the vacuum recovery is suspended.

To the right hand side of the first cylinder 102 is a modified second cylinder 117. This is coaxially aligned and linked by means of a series of bolts 3, see Figure 1. To the right hand side of cylinder 117 is a flange 118. This allows the threaded mounting flange 119 to be used for a hose connection 101, see Figure 9 (A) or to be omitted thus allowing flange 118 to be directly connected to a fixed flange. To assist the assembly process, a modified static piston 120 is now coaxially aligned through an annular bore 121 in cylinder 117. To seal against fluid material leakage an O-ring seal 122 is housed in an annular groove 123 in a static piston 120 annular recess 124 in cylinder 117. A further O-ring seal 125 is housed in an annular groove 126 contained in the flange 118 flange face 127 in cylinder 117. When the threaded mounting flange 119 is coaxially aligned and fitted by a series of bolts 128 and nuts 129 to the flange 118, the O-ring seals 122 and 125 are compressed to create the seal. The static piston 120 compresses O-ring 122 and the O-ring 125 is compressed by the threaded hose flange 119. The O-ring seals 122 and 125 would equally be compressed if the connector apparatus were mounted onto a fixed flange with the threaded hose flange being omitted. To the right hand side of the static piston 120 is an annular groove 130. This is provided to house the filter element 17, see Figure 1. The two O-rings 18 and 19, see Figure 1, have been omitted for clarity purposes but seal the filter element 17 in the same way. It will be noted that the embodiment shown in Figure 10 does not require third biassing means.

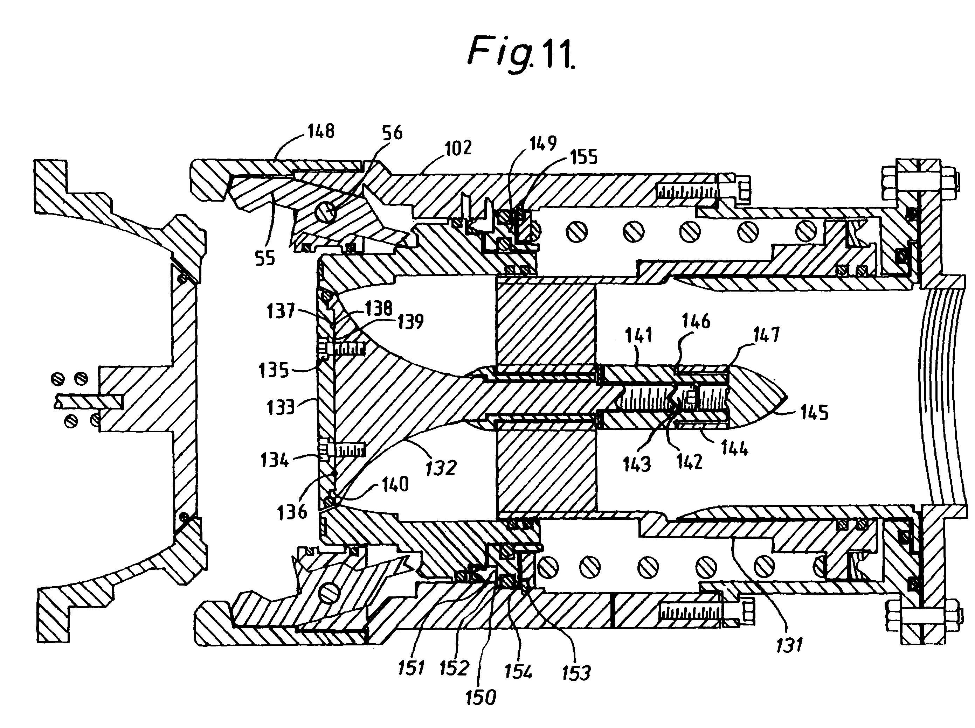

Referring now to Figure 11 the combined piston sleeve-spring retainer 131 is depicted as a single component, thus reducing the manufacturing process. Housed within piston-spring retainer 131 is a modified main valve 132. To the left hand side of the main valve 132 is a valve face plate 133 which is retained to the main valve 132 by a series of bolts 134. This enables the seal 47, see Figure 2, to be replaced without any dismantling of the connector apparatus being required. To restrict any leakage of the fluid commodity through the series of bolts 134, in apertures 135 incorporated in a valve face plate 133, an O-ring seal 136 is compressed in an annular groove 137 in the valve face plate 133 and a annular groove 138 in the main valve 132. To allow for alignment of the valve face plate 133 and the main valve 132, an annular recess 139 is incorporated in the main valve 132. Correspondingly an annular raised section 140 is incorporated on the valve face plate 133.

To the right hand side of the main valve 132 is a modified tubular lock nut 141. To achieve a full locking of the tubular lock nut 141 to the main valve 132, a locking screw 142 is tightened against the end of the main valve stem 143. To overcome any fluid material flow problems that may arise, a tubular section 144 is engaged over the tubular lock nut 141. To complete the assembly, a threaded tapered cap 145 is screwed into the remaining thread of the tubular locking nut 141, thus trapping the tubular section 144 between the abut face 146 on the tubular locking nut 141 and the abut face 147 on the threaded tapered cap 145.

To the left hand side of the delivery nozzle-jaw actuator 106 are the jaws 55, see Figure 3. The jaws 55 are retained in the slots by means of retaining pins 56, see Figure 3. The retaining pins 56 are suitably retained by the annular cover 148. The annular tubular cover 148 encapsulates the jaws 55 and therefore protects the operator when the connector apparatus is being operated manually. To the right hand side of the delivery nozzle-jaw actuator 106 is a modified annular jaw static piston 149. The jaw static piston 149 is manufactured to allow the delivery nozzle-jaw actuator 106 to travel from right to left during operation. The jaw static piston 149 is retained in an annular recess 150 in cylinder 102 by engaging the abut face 151 on the jaw static piston 149 to the abut face 152 in cylinder 102. A circular spring clip 153 stops against the abut face 154 on the jaw static piston 149 and is located in an annular groove 155 in cylinder 102.

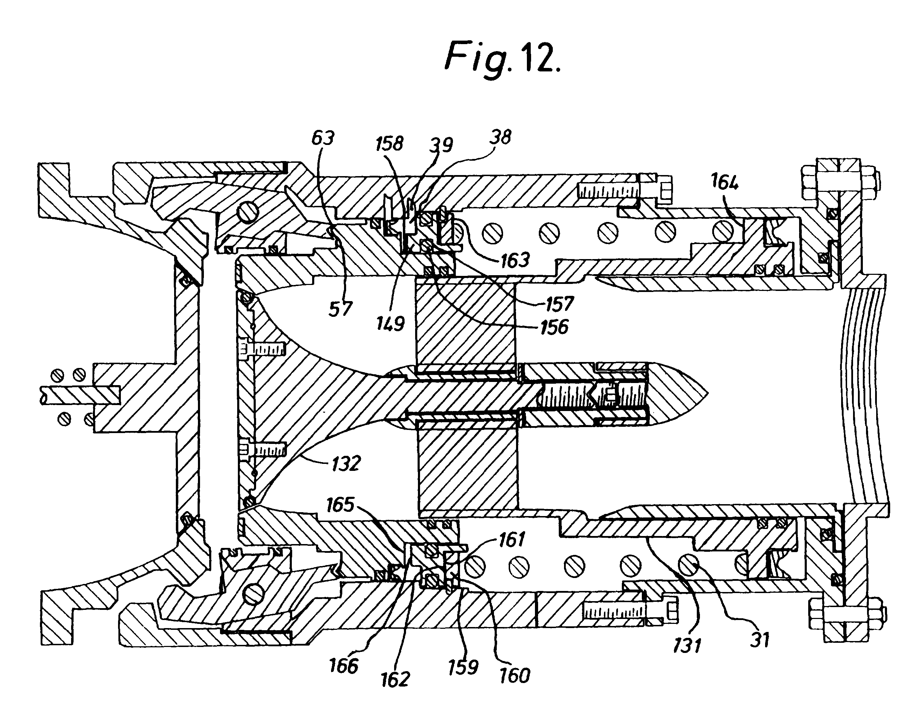

Referring now to Figure 12 the jaw static piston O-ring seal 156 is installed in an annular groove 157. This is to overcome compressed gas leakage to cavity 38, see Figure 3. The O-ring seal 156 seals against the annular surface 158 on the delivery nozzle-jaw actuator 106. The annular surface 158 replaces the threaded section on the delivery nozzle 4, see Figure 1. The outer seal 36 in the annular groove 35, see Figure 2, remains in the jaw static piston 149 and seals against the cylinder wall 159. To the right hand side of the jaw static piston 149 is a spring retainer 160. The spring retainer 160 abut face 161 stops against the abut face 162 on the jaw static piston 149. To the right hand side of the abut face 163 on the spring retainer 160 is a compression spring 31, see Figure 2, which sits against the abut face 163. Although a single compression spring is depicted, a series of compression springs may be employed for larger biassing forces and may be suitably mounted within each other or around the abut face 163 of the spring retainer 160 in a series of guides, not depicted for clarity purposes. The right hand side of the compression spring 31 stops against an abut face 164 on the piston-spring retainer 131. Similarly a series of guides may be incorporated in the piston-spring retainer 131 abut face 164 in the event of a series of compression springs being employed.

With the modification to the delivery nozzle-jaw actuator 106, the need for the series of biassing springs 86, apertures 87 in the jaw actuator taper 63, guide pins 89 in recessed apertures 90 in the delivery nozzle 4, see Figure 6 (E), are subsequently removed. The biassing force of the compression spring 31 acts to overcome the pressure applied to port 39 and cavity 38, see Figure 5 (A). The U seal 60, see Figure 3, on the delivery nozzle-jaw actuator 106 completes the sealing of the cavity 38. The seal 61 and surface area 41, see Figure 3, are no longer required with the combining of the delivery nozzle 4, see Figure 2, and the jaw actuator 58, see Figure 3. When the pressure is applied to the cavity 38, the delivery nozzle-jaw actuator 106 is moved to the left and increases the biassing force of the compression spring 31.
The movement of the delivery nozzle exerts a pulling force on the main valve 132 which in turn exerts a pulling force on the piston sleeve-spring retainer 131. This force is transferred outward to the abut face 164 of the piston sleeve-spring retainer 131 thus increasing the biassing force of the compression spring 31. The subsequent movement of the delivery nozzle-jaw actuator 106 is depicted whereby a misalignment has occurred and the delivery nozzle-jaw actuator 106 tapered section 63 has locked into the grooves 57 in the jaws 55, see Figure 5 (C). When the pressure is released from port 72, see Figure 5 (A), the reverse action occurs whereby the biassing force of spring 31 forces the piston sleeve-spring retainer 131 to the right and in turn pulls the main valve 132 along with the delivery nozzle-jaw actuator 106 until the delivery nozzle-jaw actuator 106 abut stop 165 stops against the abut stop 166 on the jaw static piston 149.

Referring now to Figure 13, there is shown a connection of a connector apparatus to a standard road tanker complementary connector flange 167. The jaws 55 have been correctly engaged, see Figure 5 (E), and have been located into the annular groove 168. With the compressed air being induced into the cavity 38, the delivery nozzle-jaw actuator 106 moves to the left and subsequently locks the jaws 55 into the annular groove 168. The seal 169 depicted in an oblong section is compressed against the abut surface 170 on the complementary connector flange 167. The pressure to this seal is increased correspondingly to any increase of pressure that is applied to the cavity 38. With the pressure increase in cavity 38, the delivery nozzle-jaw actuator 106 is continually forced to the left thus increasing the sealing between the delivery nozzle-jaw actuator 106 and the complementary connector flange 167 abut surface 170. In the event of a pressurised fluid being used, for example hydraulic oil, in the operation a further 0-ring seal 171 has been incorporated in an annular groove 172 contained in the delivery nozzle-jaw actuator 106. The 0-ring seal 171 seals against the inner cylindrical wall 37, see Figure 2, of cylinder 102 in a position to the left of the return pressure port 79, see Figure 5 (A), and prevents a bypass of hydraulic oil around the U seal 60 when passing the return pressure port 79.

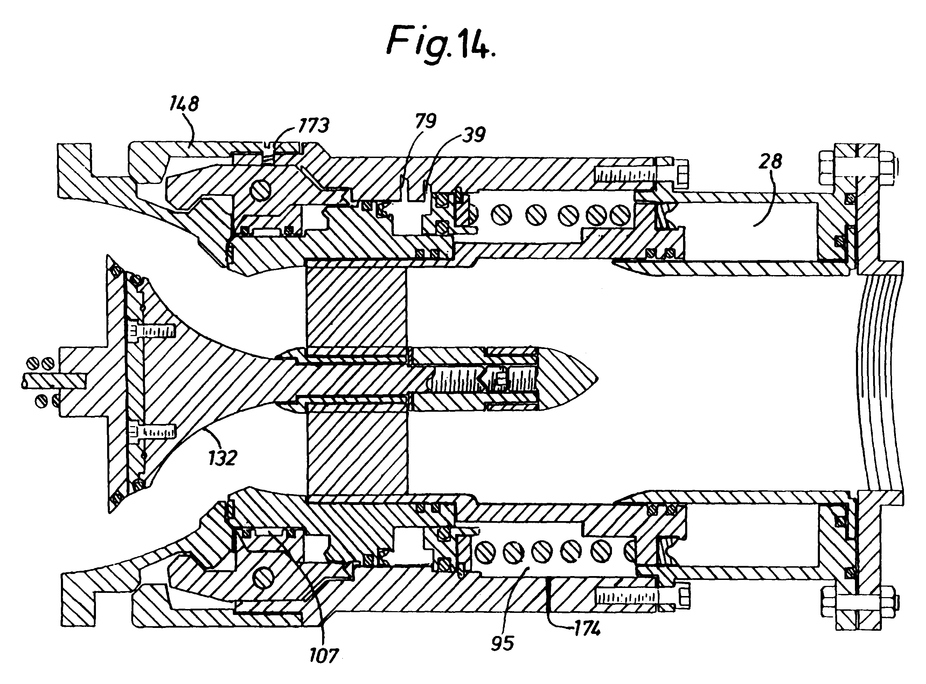

Referring now to Figure 14, the returning pressure from return pressure port 79 enters to annular chamber cavity 28 via the valve block 73, see Figure 5 (A), and the piston sleeve-spring retainer 131 is moved to the left thus opening the main valve 132 to allow the fluid material to deliver through or receive from the complementary connector.

During the operation of the connector apparatus either connecting to or disconnecting from a complementary connector, a pressure build up may occur in the spring cavity 95, see Figure 8. To overcome this, a breather port 174 allows air to ventilate out during the connection process and to be drawn into the spring cavity 95 when a disconnection takes place. The vacuum recovery annular groove 107 at this stage is closed, the delivery nozzle-jaw actuator 106 annular surface 116 having passed through the O-ring seal 112. The annular tubular cover 148 *is* retained by a series of bolts 173. When the pressure is reduced in chamber 28, the biassing force of compression spring 31 overcomes the reduction of pressure and in a reverse action closes the main valve 132 which in turn retracts the delivery nozzle-jaw actuator 106 when the pressure in the cavity 38 is suitably reduced. On the final part of the retraction, the jaws 55 are released and the disconnection is complete. The vacuum recovery system is at this stage in an operable position with the aperture 111 between the bearing surface 104 and the front outer circumference of the delivery nozzle-jaw actuator 106 being open as shown in Figure 10.

When the connector apparatus disconnects from a complementary connector it remains undamaged and is instantly reusable, unlike some known connectors that have to be rebuilt or replaced when such a disconnection occurs.

The following is a list, by way of example. of areas of application for the connector apparatus: aircraft ground refuelling receptacle units; loading and off loading of road tankers; transfer of commodities from ship to shore and vice versa; loading and offloading and transfer of commodities in oil refineries, chemical works and flowable solid distributers; loading or offloading of locomotive goods tankers; transfer of commodities from space vehicle to space vehicle; and loading of gases into space vehicles.

## Claims

1. Connector apparatus for use in the supply of fluid material, which connector apparatus comprises the combination of a jaw segment mechanism (55) which comprises a plurality of pivotable jaw segments and which is for connecting the connector apparatus to a complementary connector (65, 66), first biassing means (83) for operating the jaw segment mechanism (55) in order to disconnect the connector apparatus from the complementary connector (65, 66), control signal means (73) which operates consequent upon an incorrect connection of the connector apparatus to cause the disconnection of the connector apparatus from the complementary connector via the first biassing means (83) and thus allow the connector apparatus to separate from the complementary connector, at least one movable cylindrical member (6) which moves in order to allow the fluid material to pass through the connector apparatus, and a single valve means (46) for stopping the flow of the fluid material through the connector apparatus.

2. Connector apparatus according to claim 1 and including second biassing means (31) for closing the valve means (46).

3. Connector apparatus according to claim 1 or claim 2 in which the jaw segment mechanism (55) includes a jaw actuator (58) for operating the jaw segments (55) of the jaw segment mechanism (55).

4. Connector apparatus according to claim 3 and including third biassing means (86) for disengaging the jaw actuator (58) and thus allowing the release of the jaw segments (55) from the complementary connector.

5. Connector apparatus according to any one of the preceding claims in which the first biassing means (83) is for neutralising the jaw segments (55) in order to release the jaw segments (55) of the jaw segment mechanism (55) from the complementary connector.

6. Connector apparatus according to any of the preceding claims and including pressure sensor means for controlling the pressure of the fluid material passing through the connector apparatus.

7. Connector apparatus according to any one of the preceding claims in which the control signal means (73) comprises a cylindrical piston and valve arrangement disposed to control the flow of the fluid material through the connector apparatus in response to a control signal.

8. Connector apparatus according to any one of the preceding claims and including a mechanism (57) for detecting any misactivation between the connector apparatus and the complementary connector, and for operating such that the jaw segments (55) of the jaw segment mechanism (55) are locked out.

9. Connector apparatus according to any one of the preceding claims and including manual activation means (82) for enabling the connector apparatus to be physically engaged and energized or de-energized and removed from the complementary connector.

10. Connector apparatus according to any one of the preceding claims in which the first, second and third biassing means (83, 31, 86) are for returning the connector apparatus for further use when an activation supply pressure has been exhausted.

11. Connector apparatus according to claim 3 and including cycle termination means (63) for stopping operation of the jaw actuator (58) in the event of a misactivation of the connector apparatus.

## Patentansprüche

1. Verbindungsvorrichtung für Flüssigkeitszufuhr, welche Verbindungsvorrichtung die Kombination eines Klauensegmentmechanismus (55), der eine Mehrzahl von schwenkbaren Klauensegmenten aufweist, und der zum Verbinden der Verbindungsvorrichtung mit einem Komplementär-Verbinder (65, 66) bestimmt ist, erster Vorspanneinrichtungen (83) um den Klauensegmentmechanismus (55) zu betätigen um die Verbindungsvorrichtung von dem Komplementär-Verbinder (65, 66) zu trennen, Prüfsignaleinrichtungen (73), die auf eine unrichtige Verbindung der Verbindungsvorrichtung hin arbeiten, um die Trennung der Verbindungsvorrichtung von dem Komplementär-Verbinder über die ersten Vorspanneinrichtungen (83) zu veranlassen und somit der Verbindungsvorrichtung zu erlauben, sich vom Komplementär-Verbinder zu trennen, mindestens eines beweglichen zylindrischen Gliedes (6), das sich bewegt, um dem fluiden Material zu erlauben, durch die Verbindungsvorrichtung hindurchzugehen, und einer Einzelventileinrichtung (46) um den Fluß des fluiden Materials durch die Verbindungsvorrichtung anzuhalten, aufweist.

2. Verbindungsvorrichtung nach Anspruch 1, und zweite Vorspanneinrichtungen (31) zum Schließen der Ventileinrichtungen (46) aufweisend.

3. Verbindungsvorrichtung nach Anspruch 1 oder Anspruch 2, in der der Klauensegmentmechanismus (55) einen Klauenbetätiger (58) zum Betätigen der Klauensegmente (55) des Klauensegmentmechanismus (55) aufweist.

4. Verbindungsvorrichtung nach Anspruch 3, und dritte Vorspanneinrichtungen (86) zum Außereingriffbringen des Klauenbetätigers (58) und somit das Loslassen der Klauensegmente (55) vom Komplementär-Verbinder erlaubend, aufweisend.

5. Verbindungsvorrichtung nach irgendeinem der vorhergehenden Ansprüche, in der die ersten Vorspanneinrichtungen (83) zum Wirkungslosmachen der Klauensegmente (55), um die Klauensegmente (55) des Klauensegmentmechanismus (55) vom Komplementär-Verbinder zu lösen, dienen.

6. Verbindungsvorrichtung nach irgendeinem der vorhergehenden Ansprüche, und Druckfühleinrichtungen zum Überprüfen des Druckes des fluiden Materials, das durch die Verbindungsvorrichtung hindurchgeht, aufweisend.

7. Verbindungsvorrichtung nach irgendeinem der vorhergehenden Ansprüche, in der die Prüfsignaleinrichtungen (73) eine zylindrische Kolben- und Ventileinrichtung, die angeordnet ist, um den Fluß des fluiden Materials durch die Verbindungsvorrichtung in Antwort auf ein Steuersignal zu steuern, aufweisen.

8. Verbindungsvorrichtung nach irgendeinem der vorhergehenden Ansprüche, und einen Mechanismus (57) zum Fühlen einer Fehlbetätigung zwischen der Verbindungsvorrichtung und dem Komplementär-Verbinder, und um so zu wirken, daß die Klauensegmente (55) des Klauensegmentmechanismus (55) ausgeklinkt werden, aufweisend.

9. Verbindungsvorrichtung nach irgendeinem der vorhergehenden Ansprüche, und Handbetätigungseinrichtungen (82), um der Verbindungsvorrichtung zu ermöglichen, körperlich in Eingriff zu gelangen und mit Energie versorgt oder davon abgeschnitten zu werden und vom Komplementär-Verbinder entfernt zu werden, aufweisend.

10. Verbindungsvorrichtung nach irgendeinem der vorhergehenden Ansprüche, in der die ersten, zweiten und dritten Vorspanneinrichtungen (83, 31, 86) zum Rückführen der Verbindungsvorrichtung zur weiteren Verwendung, wenn ein Betätigungszufuhrdruck erschöpft ist, bestimmt sind.

11. Verbindungsvorrichtung nach Anspruch 3, und Zyklusabbrucheinrichtungen (63) zum Anhalten der Betätigung des Klauenbetätigers (58) im Falle einer Fehlbetätigung der Verbindungsvorrichtung aufweisend.

## Revendications

1. Appareil de raccordement à utiliser dans l'alimentation de fluide, cet appareil de raccordement comprenant la combinaison d'un mécanisme de segment de mâchoires (55) qui comporte plusieurs segments de mâchoires capables de pivoter et qui est destiné à raccorder l'appareil de raccordement à un connecteur complémentaire (65, 66), de premiers moyens de rappel (83) pour manoeuvrer le mécanisme de segment de mâchoires (55) en vue de déconnecter du connecteur complémentaire (65, 66) l'appareil de raccordement, de moyens de signal de commande (73) qui fonctionnent à la suite d'une connexion incorrecte de l'appareil de raccordement pour provoquer la déconnexion de l'appareil de raccordement et du connecteur complémentaire par l'intermédiaire des premiers moyens de rappel (83) et permettre donc une séparation entre l'appareil de raccordement et le connecteur complémentaire, d'au moins un élément cylindrique mobile (6) qui se déplace en vue de permettre le passage du fluide à travers l'appareil de raccordement, et d'un moyen de soupape unique (46) pour arrêter l'écoulement du fluide à travers l'appareil de raccordement.

2. Appareil de raccordement suivant la revendication 1, comprenant des seconds moyens de rappel (31) pour fermer le moyen de soupape (46).

3. Appareil de raccordement suivant l'une des revendications 1 et 2, caractérisé en ce que le mécanisme de segment de mâchoires (55) comprend un élément d'actionnement de mâchoires (58) pour manoeuvrer les segments de mâchoires (55) du mécanisme de segment de mâchoires (55).

4. Appareil de raccordement suivant la revendication 3, comprenant des troisièmes moyens de rappel (86) pour désengager l'élément d'actionnement de mâchoires (58) et donc permettre la libération des segments de mâchoires (55) à partir du connecteur complémentaire.

5. Appareil de raccordement suivant l'une quelconque des revendications précédentes, caractérisé en ce que les premiers moyens de rappel (83) sont destinés à neutraliser les segments de mâchoires (55) en vue de libérer les segments de mâchoires (55) du mécanisme de segment de mâchoires (55) à partir du connecteur complémentaire.

6. Appareil de raccordement suivant l'une quelconque des revendications précédentes, comprenant des moyens de détection de pression pour contrôler la pression du fluide passant à travers l'appareil de raccordement.

7. Appareil de raccordement suivant l'une quelconque des revendications précédentes, caractérisé en ce que les moyens de signal de commande (73) comprennent un piston cylindrique et un agencement de soupape disposés pour commander l'écoulement du fluide à travers l'appareil de raccordement en réponse à un signal de commande;

8. Appareil de raccordement suivant l'une quelconque des revendications précédentes, comprenant un mécanisme (57) pour détecter toute activation défectueuse entre l'appareil de raccordement et le connecteur complémentaire et pour manoeuvrer de telle façon que les segments de mâchoires (55) du mécanisme de segment de mâchoires (55) soient bloqués.

9. Appareil de raccordement suivant l'une quelconque des revendications précédentes, comprenant des moyens d'activation manuels (82) pour permettre à l'appareil de raccordement d'être physiquement engagé et activé ou désactivé et enlevé du connecteur complémentaire.

10. Appareil de raccordement suivant l'une quelconque des revendications précédentes, caractérisé en ce que les premiers, seconds et troisièmes moyens de rappel (83, 31, 86) sont destinés à rappeler l'appareil de raccordement pour un usage ultérieur lorsqu'une pression d'alimentation en activation a été consommée.

11. Appareil de raccordement suivant la revendication 3, comprenant des moyens de terminaison de cycle (63) pour arrêter un fonctionnement de l'élément d'actionnement de mâchoires (58) dans le cas d'une activation défectueuse de l'appareil de raccordement.
